# EUROPÄISCHE PATENTANMELDUNG

(11) **EP 1 953 339 A1**
(43) Veröffentlichungstag der Anmeldung: **06.08.2008**
(21) Anmeldenummer: 06024161.9
(22) Anmeldetag: 21.11.2006
(51) Int. Cl.: F01D 5/00

(54) **Verfahren zur Reparatur eines Turbinenlaufrades**

(71) Anmelder: SIEMENS AKTIENGESELLSCHAFT, 80333 München (DE)
(72) Erfinder: Benkler, François, Dr., 40880 Ratingen (DE); Ceric, Hajrudin, 46045 Oberhausen (DE); Hülfenhaus, Armin, 40764 Langenfeld (DE); Lüttenberg, Andreas, 45289 Essen (DE); Schaberg, Axel, Dr., 59302 Oelde (DE); Skreba, Steffen, Dr., 91077 Neunkirchen am Brand (DE)

(57) **Zusammenfassung**

Ein Verfahren zur Reparatur eines Turbinenlaufrades (20), insbesondere einer Gas- oder Dampfturbine, mit einer Anzahl von über den Umfang verteilten, jeweils mit einer Profilierung eines Schaufelfußes korrespondierend ausgeformten Halteelementen (24), bei dem das Turbinenlaufrad mit einem beschädigten Halteelement (24) nicht ausgetauscht werden muss. Dazu wird erfindungsgemäß das beschädigte Halteelement (24) durch ein Ersatz-Halteelement (28) ersetzt, das kraft- und/oder formschlüssig am Turbinenlaufrad (20) angebracht wird.

## Beschreibung

Die Erfindung betrifft ein Verfahren zur Reparatur eines Turbinenlaufrades, insbesondere einer Gas- oder Dampfturbine, mit einer Anzahl von über den Umfang verteilten, jeweils mit einer Profilierung eines Schaufelfußes korrespondierend ausgeformten Halteelementen.

Dampf- und Gasturbine zählen zu den thermischen Strömungsmaschinen und weisen üblicherweise einen von einem feststehenden Gehäuse umgebenen drehbar gelagerten Rotor auf. Die feststehenden Baugruppen einer Dampf- oder Gasturbine werden zusammenfassend auch als Stator bezeichnet. Zwischen dem Rotor und dem Stator ist ein in axialer Richtung der Strömungsmaschine verlaufender Strömungskanal für ein kompressibles Strömungsmedium angeordnet. An dem Rotor sind üblicherweise in den Strömungskanal hineinragende und zu Schaufelgruppen oder Schaufelreihen zusammengefasste Laufschaufeln befestigt. Die Laufschaufeln dienen dabei zum Antrieb der Rotorwelle durch Impulsübertrag aus einem heißen und unter Druck stehenden Strömungsmedium, z. B. in Form von Dampf. Die thermische Energie des Gases wird also bei dessen Entspannung in mechanische Energie umgewandelt, die beispielsweise zum Antrieb eines elektrischen Generators genutzt werden kann.

Die gewonnene mechanische Energie kann beispielsweise aber auch zur Komprimierung des im Strömungskanal befindlichen Strömungsmediums dienen. Bei einer Gasturbine sind dazu üblicherweise eine Verdichtereinheit und eine Turbineneinheit auf einer gemeinsamen Welle angeordnet. Der Verdichter, auch Kompressor genannt, saugt kalte Umgebungsluft an, verdichtet sie und führt sie dann einer Brennkammer zu, wo sie zusammen mit einem eingespritzten Brennstoff verbrannt wird. Ein Teil der so erzeugten mechanischen Energie wird damit zum Antrieb des Verdichters genutzt. Der verbleibende Teil steht als nutzbare Energie zur Verfügung.

Neben den rotorseitig angeordneten Laufschaufeln kann eine Dampf- oder Gasturbine auch noch am Stator angeordnete und in den Strömungskanal hineinragende Leitschaufeln aufweisen. Die Leitschaufeln sind üblicherweise wie auch die Laufschaufeln ebenfalls zu Schaufelgruppen oder Schaufelreihen zusammengefasst. Die üblicherweise zwischen benachbarten Laufschaufelreihen angeordneten Leitschaufeln dienen zur Führung des Strömungsmediums in der Turbineneinheit.

Eine aufeinander folgende Einheit von einer Laufschaufelreihe und einer Leitschaufelreihe wird auch als Stufe, bei einer Turbine als Turbinenstufe und bei einem Verdichter als Verdichterstufe bezeichnet. Die Laufschaufeln einer Turbinenstufe sind an einem mit dem Rotor verbundenen Turbinenlaufrad angebracht. Die Laufschaufeln bilden somit einen Schaufelring, wobei die Schaufelfüße üblicherweise in entlang des Ringumfangs eingebrachten Ausnehmungen gehalten sind und das Schaufelblatt jeweils entlang des Ringradius orientiert ist.

Durch das mit dem Arbeitsmedium einer Dampf- oder Gasturbine beaufschlagte Schaufelblatt wirken erhebliche Kräfte auf den Schaufelfuß. Dieser ist deshalb besonders zuverlässig in der Ausnehmung, d. h. in dem Halteelement des Turbinenlaufrades, zu arretieren. Die Befestigung der einzelnen Schaufeln in dem Turbinenlaufrad wird üblicherweise durch eine Paarung von Nut- und Fußgeometrien, z. B. im Sinne einer Nut-Feder-Verbindung, sichergestellt. Eine bisher bekannte Möglichkeit, die der hohen Belastung gerecht wird, besteht darin, den Schaufelfuß durch ein speziell an die Geometrie zwischen Schaufelfuß und seiner Umgebung angepasstes Halteelement festzusetzen. Insbesondere kann dabei ein geometrisch angepasstes Halteelement speziell für eine Geometrie zwischen zwei Schaufelfüßen geformt sein. Auf diese Weise füllt das Halteelement den Raum zwischen zwei benachbarten Schaufelfüßen vollständig aus.

Ein fester Sitz der Laufschaufeln am Turbinenlaufrad setzt eine hohe Passgenauigkeit zwischen dem Schaufelfuß und dem Halteelement voraus. Daraus ergibt sich aber auch das Problem, dass sich aufgrund der unterschiedlichen thermischen Ausdehnungen hohe Spannungen an der Verbindungsstelle zwischen dem Schaufelfuß und den benachbarten Halteelementen aufbauen können. Dies kann vereinzelt zu Rissen im Radkörper insbesondere im Bereich der Halteelemente und zur Beeinträchtigung des Betriebes bis hin zum Ausfall der Turbine führen. Da die Reparatur des Turbinenlaufrades mittels Schweißen nicht zulässig ist, muss in einem derartigen Fall jeweils das gesamte Turbinenlaufrad ausgetauscht werden. Dies ist mit erheblichem Aufwand verbunden, zumal es sich hier um ein geschmiedetes Bauteil handelt, das nur mit erheblichem Aufwand hergestellt werden kann.

Der Erfindung liegt daher die Aufgabe zugrunde, ein Verfahren zur Reparatur eines Turbinenlaufrades der oben genannten Art anzugeben, mit dem ein zuverlässiger Weiterbetrieb der Turbine mit besonders gering gehaltenen Aufwand ermöglicht ist.

Diese Aufgabe wird erfindungsgemäß gelöst, indem ein beschädigtes Halteelement durch ein Ersatzhalteelement ersetzt wird, das kraft und/oder formschlüssig am Turbinenlaufrad angebracht wird.

Die Erfindung geht dabei von der Überlegung aus, dass der Aufwand für einen zuverlässigen Weiterbetrieb der Turbine besonders gering gehalten werden kann, indem die Reparatur gezielt auf eine Weiterverwendung des beschädigten Laufrades ohne dessen Austausch hin ausgerichtet ist. Um dabei die Sicherheits- und Zuverlässigkeitsvorgaben stets einzuhalten, sollte bei der Reparatur ein geeignetes Ersatzteil bereitgestellt werden, das auf besonders innige und langlebige Weise mit dem Radkörper verbunden wird.

Zu diesem Zweck wird vorteilhafterweise ein Satz von Rohlingen als Ersatzelemente bereitgehalten, wobei der Fuß eines jeden Ersatz-Halteelements an den jeweiligen Reparaturfall, das heißt je nach Ausmaß des beschädigten Bereichs des Radkörpers, angepasst ist. Dabei wird das beschädigte Halteelement durch das entsprechende Ersatz-Halteelement ersetzt und mit dem Radkörper derart verbunden, dass keine Beeinträchtigung der Festigkeit des Turbinenlaufrades eintritt und die Betriebssicherheit weiter gewährleistet ist.

Da Schweißarbeiten an dem Turbinenlaufrad nicht zulässig sind, wird das Ersatz-Halteelement vorzugsweise mittels einer Schraubverbindung mit dem Turbinenlaufrad verbunden. Dazu wird dieses zweckmäßigerweise mit einer in dessen Längsrichtung und nach dem Anbringen am Turbinenlaufrad in radialer Richtung zur Rotorachse verlaufende Bohrung versehen. Diese Bohrung setzt sich bis zu einer vorbestimmten Tiefe im Radkörper fort. Dabei wird die im Turbinenlaufrad verlaufende Bohrung vorzugsweise mit einem Gewinde versehen, um das Ersatz-Halteelement mittels einer Schraube oder eines Gewindebolzens fest mit dem Turbinenlaufrad verbinden zu können. Der Schraubenkopf wird dabei vorzugsweise im Kopfbereich des Ersatz-Halteelements versenkt, wobei zu diesem Zweck eine entsprechend der Ausdehnung des Schraubenkopfes große Ausnehmung im Kopfbereich des Ersatz-Halteelements eingebracht ist. Die Gewindetiefe im Laufradkörper sollte derart bemessen sein, dass eine ausreichend große Betriebssicherheit gewährleistet ist. Das heißt, das Gewindebohrloch sollte z. B. nicht zu tief in den Radkörper hineinreichen, um die Stabilität des gesamten Turbinenlaufrades nicht unnötig herabzusetzen.

Um einer eventuell auftretenden Unwucht, welche durch die reparaturbedingte Veränderung am Turbinenlaufrad hervorgerufen werden kann, entgegenzuwirken, sind am Läufer vorzugsweise mehrere "Kraftwerks"-Wuchtebenen vorhanden, in denen je nach Unwucht Wuchtgewichte mit unterschiedlichen Massen eingeschraubt werden können.

Für eine besonders einfach gehaltene Reparatur werden vorteilhafterweise standardisierte Ersatz-Halteelemente vorgefertigt und für den Bedarfsfall vorgehalten. Um dabei bei der Reparatur den gewünschten Formschluss im Fußbereich des Ersatz-Halteelements mit dem Radkörper zu gewährleisten, wird die beschädigte Stelle mit einer an die Kontur des Fußareals angepassten Konturierung aus dem Laufrad entfernt. Um dabei den gewünschten Formschluss gewährleisten zu können, kann eine entsprechende Nachbearbeitung der Konturen vorgenommen werden. Darüber hinaus ist aber auch im Hinblick auf die hohe Belastung in diesem Bereich ein besonders guter Formschluss zwischen der entstehenden zur Aufnahme der Laufschaufel vorgesehenen Formausnehmung und dem Laufschaufelfuß bedeutsam. Um diesen auch noch zu gewährleisten, kann nach der Montage des Ersatz-Halteelements eine mechanisch Nachbearbeitung der Formausnehmung erfolgen, wobei nach der Montage des Ersatz-Halteelements eine mechanische Bearbeitung der Formausnehmung zur Aufnahme der Laufschaufel, bedingt durch die hohe Belastung in diesem Bereich, erforderlich sein kann.

Um das beschädigte Halteelement zu entfernen, können mehrere Trennverfahren zum Einsatz kommen. Zur Vermeidung von thermischen Spannungen im Radkörper sollte vorzugsweise ein elektrochemisches oder in besonders vorteilhafter Ausgestaltung ein mechanisches Trennverfahren eingesetzt werden, da bei derartigen Verfahren die Wärmeeinbringung gegenüber thermischen Trennverfahren vergleichsweise gering ist. Beispielsweise kann das beschädigte Halteelement mittels Fräsbearbeitung entfernt werden, da bei dieser Art der Materialbearbeitung die auftretende Wärme durch Kühlmittel abgeführt werden kann. Somit werden Spannungen im Material oder gar Verformungen des Turbinenlaufrades verhindert.

Das nach dem Entfernen des beschädigten Halteelements an den Radkörper anzubringende Ersatz-Halteelement wird vorzugsweise nicht nur aus dem Haltekörper, welcher zwischen zwei benachbarten Schaufelfüßen angeordnet ist, gebildet, sondern dehnt sich radial in Richtung Rotorachse weiter aus. Damit wird erreicht, dass im Reparaturfall der gesamte Bereich, in dem Materialausbrüche und/oder Risse aufgetreten sind, ersetzt werden kann. Der Fußbereich der Halteelemente, also der Bereich, der sich radial in Richtung der Rotorachse ausdehnt, kann zur besseren Anpassung an den jeweiligen Reparaturfall unterschiedlich groß ausgebildet sein. Denkbar ist beispielsweise ein Sortiment an unterschiedlichen Halteelementen, aus dem entsprechend dem Ausmaß der Beschädigung ein besonders geeignetes Ersatz-Halteelement ausgewählt werden kann. Der wesentliche Vorteil dabei ist, dass nur der defekte Bereich des Turbinenlaufrades entsprechend der Geometrie des Fußes des Ersatz-Halteelements entfernt wird. Somit lässt sich die Ausfallzeit der Turbine minimieren und die Reparaturkosten lassen sich gering halten. Zudem ist der Einfluss des Reparatureingriffs auf die Stabilität des gesamten Turbinenlaufrades durch einen derartigen selektiven Einsatz des Ersatz-Halteelements gering.

In besonders vorteilhafter Ausgestaltung ist der Radkörper mit einer zur formschlüssigen Aufnahme eines Fußbereiches des Ersatz-Halteelements vorgesehenen Formausnehmung mit Hinterschneidung versehen. Durch diese besondere Form der Ausnehmung im Radkörper können die Fliehkräfte aufgrund der hohen Drehzahlen des Rotors der Turbine, welche die Verbindung in radialer Richtung zum Turbinengehäuse auf Zug beanspruchen, ohne direkte Belastung der Verbindung des angebrachten Ersatzelements aufgenommen werden. Damit wird die kraft- und formschlüssige Verbindung zwischen dem Turbinenlaufrad und dem Ersatz-Halteelement durch diese zusätzlich geschaffene formschlüssige Verbindung wesentlich verbessert. Zudem ermöglicht eine derartige auf einfache Weise geschaffene Verbindung, dass die Gewindetiefe im Radkörper geringer ausfallen kann als bei einer Verbindung ohne eine solche Formausnehmung im Radkörper.

Da es auch vorkommen kann, dass eine Anzahl benachbarter Halteelemente gleichzeitig beschädigt sind, sollte vorteilhafterweise der Austausch dieser beschädigten Halteelemente in einem Arbeitsgang erfolgen. Dieses Problem wird dadurch gelöst, indem die Anzahl beschädigter Halteelemente durch ein Ersatzelement mit gleicher Anzahl von Ersatz-Halteelementen ersetzt wird. Analog zum Austausch einzelner beschädigter Halteelemente kann ein Sortiment von Ersatzelementen, welche mit einer unterschiedlichen Anzahl von Ersatz-Halteelementen versehen sind, für die Reparatur bereitgehalten werden.

Die Befestigung der Ersatz-Halteelemente kann, wie bereits beim Austausch einzelner Halteelemente beschrieben, mittels einer Schraubverbindung erfolgen. Jedes der Ersatz-Halteelemente am Ersatzelement ist dabei vorzugsweise mit einer nach der Montage am Radkörper radial verlaufenden Bohrung versehen. Der Radkörper sollte zur Schaffung einer hohen Festigkeit eine zur formschlüssigen Aufnahme eines Fußbereiches des Ersatzelements vorgesehene Formausnehmung aufweisen.

Je nach Größe und Form der Ersatz-Halteelemente kann es sinnvoll sein, dass das Ersatz-Halteelement oder jedes Ersatz-Halteelement eines Ersatzelements mit mehr als einem Bohrloch für eine Schraubverbindung versehen ist.

Die mit der Erfindung erzielten Vorteile bestehen insbesondere darin, dass durch die kraft und/ oder formschlüssige Verbindung eines Ersatz-Halteelements ein beschädigtes Turbinenlaufrad oder Verdichterlaufrad selbst im Hinblick auf übliche Sicherheits- und Zuverlässigkeitsvorgaben repariert werden kann und nicht ausgetauscht werden muss. Damit wird die Verfügbarkeit der Maschine erheblich gesteigert, und zudem sind die Kosten im Vergleich zu einer neuen Radscheibe wesentlich geringer. Im Schadensfall können die beschädigten Halteelemente durch die bereitgestellten Ersatz-Halteelemente ersetzt werden. Zudem ist der Austausch mehrerer beschädigter Halteelemente durch ein Ersatzelement möglich.

Ein Ausführungsbeispiel der Erfindung wird anhand einer Zeichnung näher erläutert. Darin zeigen:
- FIG 1: eine schematische Darstellung einer Gasturbine im Längsschnitt, und
- FIG 2: einen Ausschnitt eines Turbinenlaufrades, welches mit einem Ersatz-Halteelement versehen ist.

Gleiche Teile sind in allen Figuren mit denselben Bezugszeichen versehen.

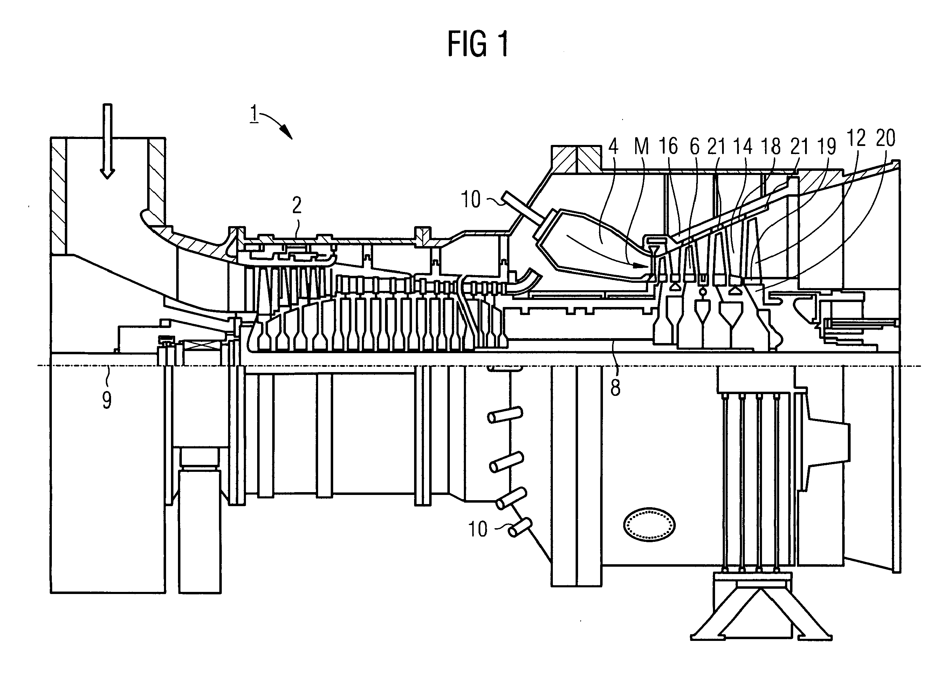

Die Gasturbine 1 gemäß FIG 1 weist einen Verdichter 2 für Verbrennungsluft, eine Brennkammer 4 sowie eine Turbineneinheit 6 zum Antrieb des Verdichters 2 auf. Dazu sind die Turbineneinheit 6 und der Verdichter 2 auf einer gemeinsamen, auch als Turbinenläufer bezeichneten Turbinenwelle 8 angeordnet und um ihre Mittelachse 9 drehbar gelagert ist. Die in der Art einer Ringbrennkammer ausgeführte Brennkammer 4 ist mit einer Anzahl von Brennern 10 zur Verbrennung eines flüssigen oder gasförmigen Brennstoffs bestückt.

Die Turbineneinheit 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfasst die Turbineneinheit 6 eine Anzahl von feststehenden Leitschaufeln 14, die ebenfalls kranzförmig unter der Bildung von Leitschaufelreihen an einem Innengehäuse 16 der Turbineneinheit 6 befestigt sind. Die Laufschaufeln 12 dienen dabei zum Antrieb der Turbinenwelle 8 durch Impulsübertrag vom die Turbineneinheit 6 durchströmenden Arbeitsmedium M. Die Leitschaufeln 14 dienen hingegen zur Strömungsführung des Arbeitsmediums M zwischen jeweils zwei in Strömungsrichtung des Arbeitsmediums M gesehen aufeinanderfolgenden Laufschaufelreihen oder Laufschaufelkränzen. Ein aufeinander folgendes Paar aus einem Kranz von Leitschaufeln 14 oder einer Leitschaufelreihe und aus einem Kranz von Laufschaufeln 12 oder einer Laufschaufelreihe wird dabei auch als Turbinenstufe bezeichnet.

Jede Leitschaufel 14 weist eine Plattform 18 auf, die zur Fixierung der jeweiligen Leitschaufel 14 am Innengehäuse 16 der Turbineneinheit 6 als Wandelement angeordnet ist. Die Plattform 18 ist dabei ein thermisch vergleichsweise stark belastetes Bauteil, das die äußere Begrenzung eines Heißgaskanals für das die Turbineneinheit 6 durchströmende Arbeitsmedium M bildet. Jede Laufschaufel 12 ist in analoger Weise über eine auch als Schaufelfuß bezeichnete Plattform 19 über ein Turbinenlaufrad 20 an der Turbinenwelle 8 befestigt.

Zwischen den beabstandet voneinander angeordneten Plattformen 18 der Leitschaufeln 14 zweier benachbarter Leitschaufelreihen ist jeweils ein Führungsring 21 am Innengehäuse 16 der Turbineneinheit 6 angeordnet. Die äußere Oberfläche jedes Führungsrings 21 ist dabei ebenfalls dem heißen, die Turbineneinheit 6 durchströmenden Arbeitsmedium M ausgesetzt und in radialer Richtung vom äußeren Ende der ihm gegenüber liegenden Laufschaufeln 12 durch einen Spalt beabstandet. Die zwischen benachbarten Leitschaufelreihen angeordneten Führungsringe 21 dienen dabei insbesondere als Abdeckelemente, die das Innengehäuse 16 oder andere Gehäuse-Einbauteile vor einer thermischen Überbeanspruchung durch das die Turbine 6 durchströmende heiße Arbeitsmedium M schützen.

Die Brennkammer 4 ist im Ausführungsbeispiel als so genannte Ringbrennkammer ausgestaltet, bei der eine Vielzahl von in Umfangsrichtung um die Turbinenwelle 8 herum angeordneten Brennern 10 in einen gemeinsamen Brennkammerraum münden. Dazu ist die Brennkammer 4 in ihrer Gesamtheit als ringförmige Struktur ausgestaltet, die um die Turbinenwelle 8 herum positioniert ist.

In Strömungsrichtung des Arbeitsmediums M nach der Brennkammer 4 sind die Turbinenschaufeln 12,14 angeordnet, wobei die Leitschaufeln 14 an dem Innengehäuse 16 der Gasturbine 1 und die Laufschaufeln 12 am Turbinenlaufrad 20 angebracht sind.

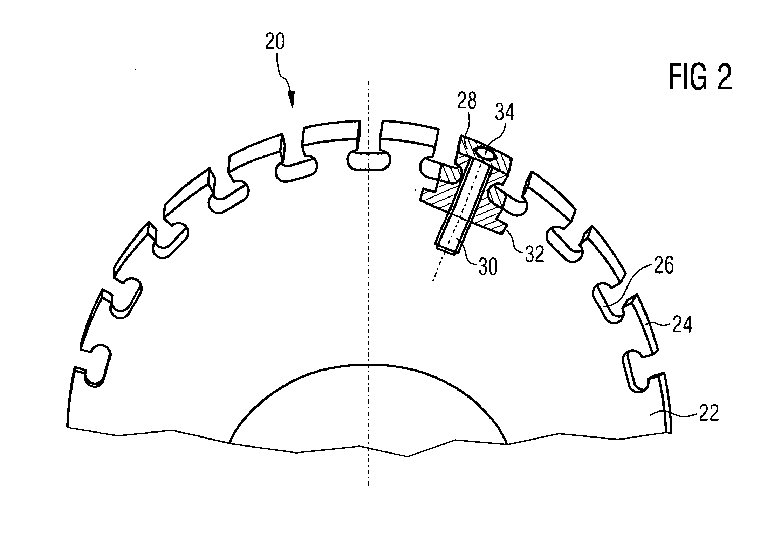

In FIG 2 dargestellt ist ein Ausschnitt des Turbinenlaufrades 20 der Turbineneinheit 6 mit einer Anzahl von am Umfang des Turbinenlaufrades 20 versehenen Halteelementen 24. Diese werden gebildet durch die zur formschlüssigen Aufnahme des Schaufelfußes vorgesehenen Formausnehmungen 26 im Radkörper 22. Das Turbinenlaufrad ist dabei mit einem Ersatz-Halteelement 28 versehen, das zur besseren Unterscheidung schraffiert dargestellt ist. Das Ersatz-Halteelement 28 ist mit einem in radialer Richtung verlaufenden Bohrloch 30 versehen, welches sich im Radkörper fortsetzt. Dabei weist das im Radkörper verlaufende Bohrloch 30 ein Gewinde zur Aufnahme der Befestigungsschraube 34 auf.

Um die Festigkeit der Verbindung zwischen dem Ersatz-Halteelement 28 und dem Radkörper 22 zu erhöhen, ist die Formausnehmung 32 zur Aufnahme des Ersatz-Halteelements 28 mit einer Hinterschneidung versehen. Dadurch können vor allem die durch die hohen Drehzahlen der Turbinenwelle 8 der Gasturbine 1 auftretenden Zentrifugalkräfte besonders gut aufgenommen werden.

Um eine derartige stabile Verbindung zwischen dem Ersatz-Halteelement 28 und dem Radkörper 22 zu erhalten, wird das beschädigte Halteelement 22 mittels Fräsbearbeitung aus dem Radkörper 22 herausgetrennt. Die Größe des herauszutrennenden Fußteils des Halteelements 22 richtet sich dabei nach dem Ausmaß der Beschädigung des Radkörpers 22. Die Geometrie der Ausnehmung richtet sich nach der Fußform des Ersatz-Halteelements 28, wobei zur Abdeckung unterschiedliche Ausmaße der Schäden am Radkörper 22 Ersatz-Halteelemente 28 mit unterschiedlichen Größen des Fußbereichs bereitgehalten werden.

Entsprechend der Position und des Verlaufs der Bohrung 30 im Ersatz-Halteelement 28 wird der Radkörper 22 an der Stelle der eingebrachten Formausnehmung mit einem Bohrloch 30 versehen. Das eingebrachte Bohrloch 30 im Radkörper 22 wird anschließend zur Aufnahme einer Befestigungsschraube 34 mit einem Gewinde versehen, wobei die Tiefe der Gewindebohrung 30 im Radkörper 22 durch die im Normalbetrieb der Turbine auftretenden aufzunehmenden Kräfte vorbestimmt ist.

Zum Erreichen einer der im Umfang des Radkörpers 22 verlaufenden stirnseitigen planen Fläche der Halteelemente 24 ist die Bohrung 30 des Ersatz-Halteelements 28 stirnseitig mit einer entsprechend der Größe des Kopfes der Befestigungsschraube 34 dimensionierten Ausnehmung versehen, so dass nach dem Anbringen des Ersatz-Halteelements 28 der Kopf der Befestigungsschraube 34 vollständig im Ersatz-Halteelement 28 versenkt ist. Damit wird erreicht, dass eine Montage der Laufschaufeln 12 insbesondere beidseitig des Ersatz-Halteelements 28 möglich ist.

## Patentansprüche

1. Verfahren zur Reparatur eines Turbinenlaufrades (20), insbesondere einer Gas- oder Dampfturbine,
mit einer Anzahl von über den Umfang verteilten, jeweils mit einer Profilierung eines Schaufelfußes korrespondierend ausgeformten Halteelementen (24),
bei dem ein beschädigtes Halteelement (24) durch ein Ersatz-Halteelement (28) ersetzt wird, das kraft- und/oder formschlüssig am Turbinenlaufrad (22) angebracht wird.

2. Verfahren nach Anspruch 1,
bei dem das Ersatz-Halteelement (28) mittels einer Schraubverbindung mit dem Turbinenlaufrad (20) verbunden wird.

3. Verfahren nach Anspruch 1 oder 2,
bei dem das beschädigte Halteelement (24) mittels eines mechanischen Trennverfahrens, vorzugsweise mittels Fräsbearbeitung entfernt wird.

4. Verfahren nach einem der vorangehenden Ansprüche,
bei dem eine zur formschlüssigen Aufnahme eines Fußbereiches des Ersatz-Halteelements (28) vorgesehene Formausnehmung (32) im Radkörper (22) mit Hinterschneidung hergestellt wird.

5. Verfahren nach einem der vorangehenden Ansprüche,
bei dem eine Anzahl beschädigter Halteelemente (24) durch ein Ersatzelement mit gleicher Anzahl von Ersatz-Halteelementen (28) ersetzt wird.
